# EUROPEAN PATENT APPLICATION

(11) **EP 1 625 883 A1**
(43) Date of publication of application: **15.02.2006**
(21) Application number: 05254723.9
(22) Date of filing: 28.07.2005
(51) Int. Cl.: B01D 53/86

(54) **Process for treating ammonia-containing exhaust gases**

(30) Priority: 04.08.2004 US 910637
(71) Applicant: GENERAL ELECTRIC COMPANY, Schenectady, New York 12345 (US)
(72) Inventor: Eiteneer, Boris Nikolaevich, Aliso Viejo California 92656 (US); Zamansky, Vladimir, Oceanside California 92054 (US); Seeker, William Randall, San Clemente California 92672 (US); England, Glenn Charles, Monarch Beach California 92629 (US)
(74) Representative: Pedder, James Cuthbert

(57) **Abstract**

A method for reducing ammonia emissions in combustion exhaust gases and other waste streams using an oxidation catalyst, whereby unreacted ammonia (ammonia "slip") is reduced downstream of a Selective Catalytic Reduction ("SCR") system simultaneously with the reduction of other gaseous pollutants. The invention utilizes a noble metal-based catalyst, such as Pt, Pd or Ru, such that the ammonia is oxidized in the presence of oxygen to a species having a higher oxidation state of nitrogen, preferably elemental nitrogen N₂. The efficiency of the process can be increased by optimizing the catalyst operating conditions and adjusting the temperature and space velocity, or the position of the metal-based catalyst relative to the SCR system.

## Description

The present invention relates to a method for reducing ammonia emissions in combustion exhaust gases and other waste streams using an oxidation catalyst. More specifically, the invention relates to the reduction of unreacted ammonia downstream of a Selective Catalytic Reduction ("SCR") system simultaneously with the reduction of other gaseous pollutants. The invention utilizes a catalyst based on noble metals, such as Pt, Pd or Ru, whereby ammonia is oxidized to produce one or more reaction products having a higher oxidation state of nitrogen, preferably elemental nitrogen and secondarily other species such as nitrous oxide, nitric oxide or nitrogen dioxide. The efficiency of the process in reducing the unreacted ammonia can be increased by optimizing the catalyst operating conditions such as the temperature and space velocity.

The SCR system is a known method used to control nitrogen oxide emissions from stationary combustion sources (NO and NO₂, collectively referred to herein as "NOX"). SCR systems normally involve the addition of a chemical agent to the exhaust stream that reacts with nitrogen oxides on the catalyst surface. The main product of the reaction is elemental nitrogen (N₂). However, a small amount of by-products such as nitrous oxide (N₂O) will also be formed.

The most commonly used chemical agents for SCR systems include ammonia NH₃ and urea (NH₂)₂CO. Both agents have similar mechanisms of NOX conversion to molecular nitrogen. The SCR process using ammonia injection takes place according to the following chemical equations:

4NH₃ + 4NO +02→ 4N₂ + 6H₂O

and

4NH₃ + 2N0₂ +02→ 3N₂ + 6H₂O

Ideally, the products of the SCR process should include only elemental nitrogen and moisture (H₂O). In practice, however, the process efficiency is less than 100% due, for example, to incomplete diffusion of the emissions to available catalytic reactive sites or an incomplete reaction with the catalyst due to limited reaction time, imperfect mixing during the SCR step, etc. These non-ideal environments invariably cause at least some un-reacted ammonia to be released at the outlet of the SCR system. The un-reacted ammonia, commonly referred to as "ammonia slip," if released to the atmosphere, can cause various harmful effects due to its toxicity to human health and its tendency to react with other atmospheric constituents resulting in the formation of fine particles that reduce atmospheric visibility and cause adverse human health effects. Thus, it is desirable to minimize or eliminate ammonia slip at the outlet of any SCR system.

The present invention provides a new method for reducing ammonia emissions in combustion.exhaust gases or other waste streams by utilizing an additional catalyst strategically positioned downstream of the SCR system catalyst that is capable of converting the ammonia slip to less harmful substances, ideally elemental nitrogen. The cost of exemplary systems using the invention can also be reduced by using certain conventional process components and hardware developed for atmospheric pollution control of stationary combustion sources.

In certain aspects, the invention includes a process for treating the exhaust gases generated by a stationary combustion source equipped with a selective catalytic reduction ("SCR") system by subjecting the unreacted gaseous ammonia downstream from the SCR system to an oxidation catalyst in order to produce reaction products having an oxidation state higher than ammonia, such as elemental nitrogen, nitrous oxide, nitric oxide or nitrogen dioxide.

The invention can also be used in applications for treating waste streams generated in non-combustion applications. In both combustion and non-combustion embodiments, the emissions of ammonia and other X-NHi compounds can be significantly reduced (where X represents part of the compound containing C, H, 0, or N atoms and i=0,1,2,3,4) through direct contact with the oxidation catalyst. That is, the X-NHi compounds in the waste stream react with oxygen on the oxidation catalyst, resulting in reaction products having nitrogen in oxidation states higher than the X-NHi compounds. Typically, the ammonia and other X-NHi compounds originate from nitrogen-containing agents present in the waste stream upstream of the oxidation catalyst such as anhydrous ammonia, aqueous ammonia, urea, cyanuric acid, amines, syngas, process gas, biomass or nitrogen-containing fuels.

The invention will now be described in greater detail, by way of example, with reference to the drawings, in which:-
FIGURE 1 is a schematic diagram of a prior art SCR process showing the use of an ammonia injection with a conventional oxidation catalyst;
FIGURE 2 is a schematic diagram of a first embodiment of an exemplary process for treating ammonia-containing exhaust gases according to the invention; and
FIGURE 3 is a schematic diagram of a second embodiment of an exemplary process for treating ammonia-containing exhaust gases according to the invention.

The present invention substantially reduces the unreacted ammonia slip at the outlet of the SCR system using an oxidation catalyst installed downstream of the SCR system catalyst. For combustion sources that contain at least some oxygen in the exhaust stream, the preferred oxidation catalysts include noble metals that oxidize the ammonia (with the oxidation state "OS" of the nitrogen in the ammonia being -3) to a species of nitrogen having a higher oxidation state, such as elemental nitrogen N₂ (OS=0), nitrous oxide N₂O (OS=+1), nitric oxide NO (OS=+2), and nitrogen dioxide NO₂ (OS=+4). As noted above, it is desirable to maximize the conversion of the ammonia slip to elemental nitrogen and minimize the formation of other nitrogen-containing species. The chemical reactions describing oxidation of the ammonia slip include the following:

4NH₃ + 302 → 2N₂ + 6H₂O

2NH₃ + 202 → N₂O + 3H₂O

4NH₃ + 502 → 4NO + 6H₂O

4NH₃ + 702 → 4NO₂ + 6H₂O

As those skilled in the art will appreciate, converting ammonia to products with different oxidation states involves different process conditions, depending in part on the specific noble metal catalyst employed in the reaction. The oxidation of ammonia to higher oxidation states (e.g., nitrogen oxides with an OS from +1 to +4) normally require higher temperatures than the temperature required for the oxidation of ammonia to N₂. Thus, the temperature for ammonia conversion to N₂ should be optimized, i.e., kept high enough to maintain a high rate of ammonia conversion to N₂ on the selected catalyst but low enough to prevent conversion of the ammonia to the less desirable nitrogen oxides. Process conditions exist under which most of the ammonia can be selectively converted to nitrogen without formation of significant amounts of nitrogen oxides.

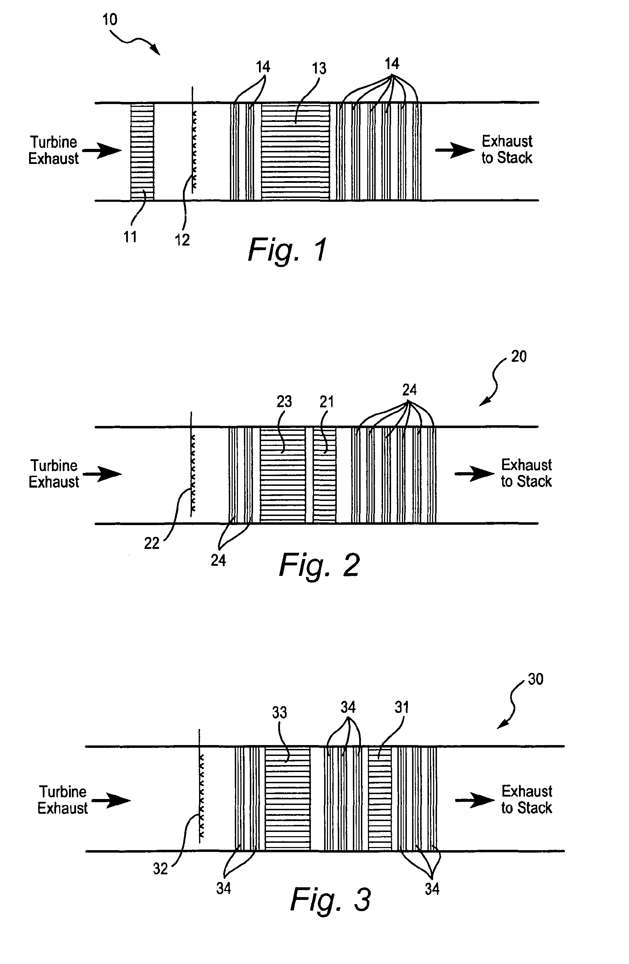

One known application of an exemplary ammonia-to-N₂ oxidation system using the invention involves treating the exhaust from gas turbines, whereby an SCR system is used in combination with an ammonia agent. Fig. 1 below depicts this conventional approach to NOX emission control. Because of the large exhaust gas flow rates from gas turbines, it is important to reduce the amount of ammonia emitted to the atmosphere, preferably to below 1 part-per-million (ppm) in order to minimize any adverse environmental impact. Other potential applications for exemplary ammonia removal systems include the treatment of exhaust gases from internal combustion engines, industrial and utility boilers or other stationary combustion exhaust sources that burn natural gas, gasoline, diesel fuel, oil, coal, biomass, waste or other fossil, renewable or synthetic fuels.

The emissions control system for a prior art gas turbine system is shown in Figure 1 and depicted generally at 10. An oxidation catalyst 11 upstream of the ammonia injection grid 12 removes carbon monoxide (CO) and other hazardous air pollutants using an SCR catalyst 13 positioned between boiler tubes 14 and downstream of the ammonia injection grid 12.

Figure 2 illustrates one exemplary embodiment of the present invention, shown generally at 20. The oxidation catalyst 21 is positioned downstream of SCR system 23 to control the CO emissions and hazardous air pollutants, while simultaneously oxidizing the ammonia slip from SCR system 23, preferably to elemental nitrogen. The ammonia injection and boiler tubes are depicted at 22 and 24, respectively. The embodiment of Figure 2 assumes that CO has no significant detrimental effect on the SCR performance.

It has also been found that the performance of the oxidation catalyst used for ammonia removal, particularly the preferential conversion to elemental nitrogen (rather than to nitrogen oxides), is temperature-dependent. That is, high temperatures tend to favor formation of nitrogen oxides, while lower temperatures tend to decrease the rate of the catalytic reaction. As those skilled in the art will appreciate, intermediate optimum temperatures can be determined for different catalytic systems that favor the formation of elemental nitrogen from the ammonia slip. Even at intermediate temperatures, some formation of N₂O and NO may occur. However, the amount can be minimized by selecting appropriate process conditions, namely the reaction temperature, space velocity and specific catalyst composition.

Normally, the operating temperature of the oxidation catalyst should remain close to the operating temperature of the SCR catalyst. For most noble metals, it has been found that the oxidation catalyst temperature should range between about 105°C and 350°C, with the maximum operating temperature range being about 100°C to 700°C. It has also been found that acceptable catalyst space velocities range between about 5,000 and 150,000 hr⁻¹.

Figure 3 illustrates another exemplary embodiment of the present invention (shown generally at 30), where the oxidation catalyst 31 is placed far enough downstream of the SCR system 33 to provide operating temperatures favoring lower-temperature ammonia conversion to elemental nitrogen, while maintaining the temperatures sufficiently high for efficient ammonia oxidation to elemental nitrogen relative to other nitrogen species.

As noted above, exemplary oxidation catalysts useful in the invention are based on noble metals, preferably platinum and/or palladium, but may include other noble metals (e.g., rhodium or ruthenium). Due to their high reactivity, these noble metals have been found very effective in oxidizing CO, H₂ and organic compounds in the exhaust gases from stationary combustion sources. In particular, the catalysts are capable of converting unburned fuels to CO₂ and H₂O in a wider temperature range with near 100% efficiency. Thus, their placement in the exhaust stream downstream of the SCR can be adjusted to an optimum temperature, thereby maximizing the reaction of ammonia to elemental nitrogen.

Various optimum temperatures and process conditions, such as oxygen concentrations and space velocities, have also been determined in order to maximize the reaction efficiency for specific oxidation catalysts. The oxidation catalysts are screened for maximum activity in ammonia removal. Additionally, the oxidation catalysts can be combined with different additives and in various compositions to maximize the removal of the ammonia. Those skilled in the art will also appreciate that the reaction conditions can be varied to enhance efficiency.

Although the processes for ammonia removal depicted in Figures 2 and 3 normally are used for SCR system applications with combustion processes that produce ammonia in the exhaust or waste process stream, the process can be adjusted for use in non-combustion, non-SCR system applications, i.e., for other processes that have exhaust or waste process streams containing ammonia and unburned fuel species, such as CO, H₂ and organic compounds.

## Claims

1. A process for treating the exhaust gases generated by a stationary combustion source equipped with a selective catalytic reduction ("SCR") system (23, 33) and for reducing the emissions of ammonia downstream of said SCR system (23, 33), said process comprising subjecting the ammonia emissions to an oxidation catalyst (21, 31) downstream of said SCR system (23, 33) whereby unreacted gaseous ammonia reacts with oxygen on said oxidation catalyst (21, 31) to produce reaction products having a higher oxidation state of nitrogen.

2. The process according to claim 1, wherein said reaction products include at least one of elemental nitrogen, nitrous oxide, nitric oxide or nitrogen dioxide.

3. The process according to claim 1, wherein said oxidation catalyst (21, 31) reduces emissions of at least one of carbon monoxide, hydrogen, hydrocarbons or aldehydes simultaneously with reducing said emissions of ammonia or said oxidation catalyst (21, 31) converts ammonia in the presence of oxygen primarily to elemental nitrogen.

4. The process according to claim 1, wherein the operating temperature of said oxidation catalyst (21, 31) is essentially the same as the operating temperature of said SCR catalyst system (23, 33) and wherein said oxidation catalyst (21, 31) operates at temperatures between about 100°C and 700°C.

5. The process according to claim 1, wherein said stationary combustion source comprises at least one of a gas turbine, gas engine, industrial boiler or utility boiler, and said stationary combustion source utilizes fuel comprised of natural gas, gasoline, diesel fuel, oil, coal, biomass, waste, fossil, renewable or synthetic fuels.

6. The process according to claim 1, wherein said oxidation catalyst (21, 31) includes one or more noble metals, including, but not limited to, at least one of platinum, palladium, ruthenium or rhodium, and alloys thereof.

7. The process according to claim 1, wherein said catalyst space velocities are between about 5,000 and 150,000 hr⁻¹.

8. A process for treating waste streams generated in non-combustion applications equipped with a selective catalytic reduction ("SCR") system (23, 33), said process comprising reducing the emissions of ammonia downstream of said SCR system (23, 33) by placing an oxidation catalyst (21, 31) downstream of said SCR system (23, 33) whereby unreacted gaseous ammonia reacts with oxygen on said oxidation catalyst (21, 31) to produce reaction products having nitrogen in oxidation states higher than ammonia.

9. A process for treating the waste streams generated in either combustion or non-combustion applications comprising reducing the emissions of ammonia and other X-NHi compounds, wherein X=part of the compound containing C, H, 0, or N atoms and i=0,1,2,3,4, by reacting said X-NHi compounds with oxygen on said oxidation catalyst (21, 31), whereby the products of said reaction have nitrogen in oxidation states higher than said X-NHi compounds.

10. The process according to claim 9, wherein said ammonia and other X-NHi compounds originate from one or more nitrogen-containing agents, including anhydrous ammonia, aqueous ammonia, urea, cyanuric acid, amines, syngas, process gas, biomass or nitrogen-containing fuels present in said waste stream upstream of said oxidation catalyst (21, 31).
